# EUROPEAN PATENT SPECIFICATION

(11) **EP 3 546 611 B1**
(45) Date of publication and mention of the grant of the patent: **01.10.2025**
(21) Application number: 17873789.6
(22) Date of filing: 16.11.2017
(51) Int. Cl.: C22C 38/14, B21B 1/38, B21B 47/02, B21B 3/02, B21B 99/00, B21D 22/04, B23K 9/02, B32B 15/01, C21D 7/13, C21D 8/02, C21D 9/46, B21D 13/04, B21B 1/22, B23K 20/04, B23K 20/227, C22C 38/06, C22C 38/12, C22C 38/22, C22C 38/02, C22C 38/04

(54) **HIGH-STRENGTH CORROSION-RESISTANT PATTERNED CLAD STEEL SHEET AND MANUFACTURING METHOD THEREFOR**
HOCHFESTES KORROSIONSBESTÄNDIGES GEMUSTERTES PLATTIERTES STAHLBLECH UND HERSTELLUNGSVERFAHREN DAFÜR
TÔLE PLAQUER À MOTIFS RÉSISTANT À LA CORROSION AVEC HAUTE RÉSISTANCE MÉCANIQUE ET SON PROCÉDÉ DE FABRICATION

(30) Priority: 23.11.2016 CN 201611037789
(43) Date of publication of application: 02.10.2019
(73) Proprietor: Baoshan Iron & Steel Co., Ltd., Shanghai 201900 (CN)
(72) Inventor: YAN, Bo, Shanghai 201900 (CN); JIAO, Sihai, Shanghai 201900 (CN); XIA, Xiaoming, Shanghai 201900 (CN)
(74) Representative: Maiwald GmbH
(86) International application number: PCT/CN2017/111252
(87) International publication number: WO 2018/095258

(56) References cited:
- EP-A1- 0 315 576
- EP-A2- 0 320 773
- CN-A- 101 804 767
- CN-A- 104 786 581
- CN-A- 105 074 039
- CN-A- 105 880 946
- CN-A- 105 903 764
- JP-A- 2015 081 367
- JP-A- H03 169 403
- NO: "ROLLED CLAD PLATES", 30 April 2003 (2003-04-30), XP055676292, Retrieved from the Internet <URL:http://files.engineering.com/download.aspx?folder=37977ece-eb0e-4192-851b-fe885f46f154&file=Rolled_Clad_Plates.pdf> [retrieved on 20200312]

## Description

### Technical field

The invention relates to a cladding sheet and a manufacturing method thereof, in particular to a cladding chequered steel and a manufacturing method therefor.

### Background art

The chequered sheet has the advantages of beautiful appearance and anti-slip surface, and thus is widely used in the market. At present, chequered steels can be divided into chequered carbon steel sheets and chequered stainless steel sheets. However, the above chequered steels have the following disadvantages:
For chequered carbon steel sheets, during the long-term use, there is a safety hazard in the use process due to corrosion of the carbon steel. Therefore, in order to prevent corrosion, it is necessary to regularly perform anticorrosion treatment on the chequered carbon steel. Anti-corrosion treatment requires enormous costs of production and labor, and prompts extremely strict requirements for processing environment (for example, the anti-corrosion process needs to be carried out in working areas with little dust). In addition, the anti-corrosion materials used in the process contain chemicals that are harmful to human health (for example, as anti-corrosion materials paints are used). Moreover, when the chequered carbon steel sheet is treated with anti-corrosion treatment, the anti-corrosion treatment also affects the use of the steel sheet. In addition, the chequered carbon steel sheet has disadvantages, such as low strength level, and a heavy weight of a component made therefrom due to the increase of the corrosion allowance.

For chequered stainless steel sheets, it has disadvantages such as low yield strength, which affects the overall stability of the component. In order to meet the stability requirements of the components, the thickness of the chequered stainless steel sheet is increased during use, thereby affecting the weight of the components.

In addition, both the chequered carbon steel sheet and the chequered stainless steel sheet are difficult to weld.

Based on the above considerations, it is desirable to clad roll a substrate layer and a cladding layer into a cladding chequered steel, while the carbon steel is used as a substrate layer providing structural properties such as strength, and the stainless steel sheet as a cladding layer providing corrosion resistance, and thereby the comprehensive requirements of strength and corrosion resistance can be met.

However, at present, the following technical difficulties are encountered in the prior art of rolling a cladding chequered steel:
(1) When rolling the chequer of a cladding chequered sheet, the metal of chequer layer flows into the groove of patterned roller, and the bonding surface of the cladding layer and the substrate layer suffer from a large tensile stress(especially when the cladding chequer layer is thin), the bonding surface is easily separated and cracked.
(2) The physical properties and high temperature deformation characteristics of the cladding layer and the substrate layer of a cladding chequered sheet are quite different, as a result, the chequered sheet after rolling is significantly increased due to the load distribution of the last pass stand, which makes the production unstable, resulting in uneven surface quality of the produced steel sheet.
(3) In a cladding chequered sheet, the chequer height is a main index for evaluating the surface chequer quality. However, in the prior art, it is difficult to meet the requirements for the height of the chequer.

EP 0 315 576 A1 discloses a procedure for fabricating clad steel plates with a carrier material of high strength and high toughness by hot-rolling of slabs covered with a layer of an austenitic cladding material, wherein the carrier material used is a steel of the composition (per cent by mass): 0.03 - 0.09% of C, 0.15 - 0.50% of Si, 1.50 - 2.20% of Mn, 0.010 - 0.050% of Al, 0.0025 - 0.006% of N, 0.010 - 0.025% of Ti, up to 0.030% of Nb, up to 0.020% of P and up to 0.005% of S, the remainder being iron and impurities resulting from the smelting, the Ti/N mass ratio being greater than 3.5, wherein the slabs are drawn at temperatures of 1100-1200 °C, depending on the content of microalloy elements, and inserted into the rolling step which is to be carried out in two phases, the first rolling phase being carried out at a degree of deformation of at least 30% and the final rolling phase being carried out at temperatures between 950 and 1050 °C, above the deformation-induced precipitation temperature of the austenitic cladding material, at a degree of deformation of at least a further 40%, the degree of deformation in the last roll pass of the final rolling phase being at least 12%, wherein immediately afterwards the clad sheets are quenched at a rate of at least 12 K/s to a temperature of between 450 and 550 °C.

EP 0 320 773 A2 discloses a process for the production of clad hot rolled strip, wherein a steel slab as base material is cladded with a layer material of a corrosion-resistnt material, the slab is of a low-alloy steel having a carbon content of up to 0.25% by weight, the layer material preferably is a stainless austenitic steel or a wrought alloy on a nickel basis, the steel slab and the layer material are connected by explosive cladding, the resulting composite body being heated to rolling temperature and is subsequently rolled down to one quarter of the initial thickness with a high reduction of pass of phi greater than 0.10 and then rolled to final thickness of the hot rolled strip, wherein the finish rolling temperature is in the range of 900 °C, the clad hot rolled strip is subjected to a cooling rate in the core of at least 8 °C/s to a cooling temperature of below 650 °C, and after cooling to this temperature range the clad hot rolled strip is coiled and cooled to room temperature.

### Summary of the invention

One of the objects of the present invention is to provide a high-strength corrosion-resistant cladding chequered steel. Through a proper mass ratio of chemical components, the cladding chequered steel produced by clad rolling has a high strength, a high corrosion resistance, a yield strength of 470 MPa or more, a tensile strength of 610 MPa or more, a shear strength of 410 MPa or more, and an elongation of 40% or less.

In order to achieve the above object, the present invention provides a high-strength corrosion-resistant cladding chequered steel according to claim 1. The high-strength corrosion-resistant cladding chequered steel comprises a substrate and a chequered cladding layer cladded on the substrate by single-sided or double-sided rolling; wherein the substrate comprising the following chemical elements in mass percentage:
C: 0.01% to 0.20%, Si: 0.10% to 0.5%, Mn: 0.5% to 2.0%, Al: 0.02% to 0.04%, Ti: 0.005% to 0.018%, Nb: 0.005% to 0.020%, 0 < B ≤ 0.0003%, N ≤ 0.006%, and the balance being iron and other inevitable impurities.

In the high-strength corrosion-resistant cladding chequered steel according to the present invention, the inevitable impurities are mainly S and P elements. The lower the impurities content, the better the technical effect. However, in consideration of the actual steelmaking level of the steel mill, in the technical solutions of the present invention, P is controlled to 0.015% or less and S is 0.010% or less.

The design principle of each chemical element of the high-strength corrosion-resistant cladding chequered steel according to the present invention is as follows:
C: Carbon is an austenite stabilizing element, which has a solid solution strengthening effect on steel and significantly increases the strength of steel. However, having a mass percentage of more than 0.20% of carbon can detriment the weldability and toughness of the steel, and tend to increase hard phase structures such as pearlite structure and "martensite-austenite island", which adversely affect the corrosion resistance of the steel. Therefore, considering the balance between strength and toughness, and corrosion resistance of the steel sheet, the mass percentage of carbon in the substrate of the high-strength corrosion-resistant cladding chequered steel of the present invention is controlled to 0.01~0.20% to ensure the strength, toughness and good weldability of the high-strength corrosion-resistant cladding chequered steel.
Si: In the technical solutions of the present invention, the addition of silicon to the steel can improve the purity and deoxidation of the steel. Silicon has a solid solution strengthening effect in steel, but an over-high percentage of silicon is harmful to welding properties. Since the steel of the chequered cladding layer also contains silicon, in the technical solutions of the present invention, the mass percentage of silicon in the substrate is controlled to 0.10~0.50%. Silicon within such concent does impair the corrosion resistance of the chequered cladding layer and can enable good welding properties of the substrate.
Mn: In the technical solutions of the present invention, manganese delays the pearlite transformation, reduces the critical cooling rate, and improves the hardenability of the steel. In addition, manganese is the main solid solution strengthening element in steel, which has a solid solution strengthening effect on steel. However, when the mass percentage of manganese is higher than 2.0%, the segregation zone and the martensite structure are easily formed, which adversely affect the toughness of the steel. In addition, the segregation zone reduces the corrosion resistance of the steel. However, when the mass percentage of manganese is less than 0.5%, it is harmful to the increase of the strength level of steel. Therefore, in the substrate of the high-strength corrosion-resistant cladding chequered steel of the present invention, the mass percentage of manganese is controlled to 0.5~2.0%.
Al: Aluminum is a strong deoxidizing element in steel. In order to reduce the content of oxygen in the steel, the mass percentage of aluminum is controlled to 0.02~0.04%. In addition, the aluminum remaining after deoxidation can form AlN precipitates with the nitrogen element in the steel, which contributes to the strength of the steel and refines the austenite grain size of the steel during heat treatment.
Ti: Titanium is a strong carbide-forming element. The addition of a trace amount of titanium is advantageous for fixing the nitrogen in the steel, and the formed TiN suppresses the excessive growth of the austenite grains in the substrate layer when the cladding billet is heated, thereby refining the size of original austenite grain. Titanium also combines with carbon and sulfur in steel to form TiC, TiS, Ti₄C₂S₂, etc., which are present in the form of inclusions and second phase particles. The above carbonitride precipitates of titanium also prevent grain growth in the heat-affected zone during welding and improve welding performances. Therefore, in the substrate of the high-strength corrosion-resistant cladding chequered steel of the present invention, the mass percentage of titanium is controlled to 0.005~0.018%.
Nb: Niobium is a strong carbide forming element. In the technical solutions of the present invention, the addition of niobium to the substrate is mainly for increasing recrystallization temperature and refining grains in the substrate, which is advantageous for improving the low-temperature impact toughness of the substrate. Therefore, the mass percentage of niobium according to the present invention is controlled to 0.005~0.020%.
B: Boron greatly improves the hardenability of steel and inhibits the formation of bainite. In order to ensure the high strength of the high-strength corrosion-resistant cladding chequered steel according to the invention, the mass percentage of boron is controlled as: 0 < B ≤ 0.0003%.
N: In the technical solutions of the present invention, the effect of nitrogen is similar to that of carbon. The mass percentage of nitrogen is controlled to 0.006% or less to ensure the strength of the high-strength corrosion-resistant cladding chequered steel according to the present invention. In some preferred embodiments, in order to further improve the strength of the high-strength corrosion-resistant cladding chequered steel, the mass percentage of nitrogen is preferably controlled to N: 0.0005%~0.005%.

Further, in the high-strength corrosion-resistant cladding chequered steel according to the present invention, the substrate optionally further comprises at least one of Ni, Cr and Mo, wherein Ni≤0.20%, Cr≤0.20%, and Mo≤0.10%.

Nickel is added because nickel can stabilize austenite and improve the strength of steel to some extent. The addition of nickel to steel (especially quenched and tempered steel) can significantly increase the low-temperature impact toughness of the steel. However, since nickel is a precious alloying element, excessive addition of nickel will increase production costs. Therefore, in the technical solutions of the present invention, an appropriate amount of nickel can be added to further improve the low-temperature impact toughness of the substrate, and the mass percentage of nickel is controlled to 0.20% or less.

Chromium is added because the segregation tendency of chromium is smaller than that of manganese. When there is obvious segregation zone and band structure in the steel of the substrate, the content of manganese can be appropriately reduced, and the reduced content can be replaced by chromium, thereby improving the strength and corrosion resistance of the steel. In addition, the addition of chromium to the substrate is also advantageous for suppressing diffusion of the chromium in the chequered cladding layer to the substrate. Therefore, in the present invention, chromium may be added in an appropriate amount, and the mass percentage of chromium is controlled to 0.20% or less.

Molybdenum is added because molybdenum can further refine grains and increase the strength and toughness of steel. In the technical solutions of the present invention, molybdenum reduces the temper brittleness of the steel, and precipitates fine carbides significantly strengthening the substrate of the steel during tempering. Further, the addition of molybdenum is advantageous for suppressing the self-temper brittleness which is easily occurred in the high-strength corrosion-resistant cladding chequered steel. However, since molybdenum is a very expensive alloying element, the mass percentage of molybdenum in the technical solutions of the present invention is controlled to 0.10% or less.

Further, in the high-strength corrosion-resistant cladding chequered steel according to the present invention, the chequered cladding layer preferably is an austenitic stainless steel.

It should be noted that, in the high-strength corrosion-resistant cladding chequered steel according to the present invention, depending on specific situations of embodiments, austenitic stainless steels meeting the requirements of national or international standards, such as 304, 304L, 316 or 316L, can be selected and used as chequered cladding layer.

Further, in the high-strength corrosion-resistant cladding chequered steel according to the present invention, the substrate preferably has a microstructure of ferrite + pearlite.

Further, in the high-strength corrosion-resistant cladding chequered steel according to the present invention, there is a transition layer at a joint of the substrate and the chequered cladding layer, and the thickness of the transition layer is 200 µm or less.

In the transition layer, the mass percentage of each chemical element is in a gradient distribution. That is, since the mass ratios of chemical elements in the chequered cladding layer and in the substrate are different, chemical elements diffuse from the side of high mass percentage to the other side of low mass percentage in the thickness direction to form a gradient distribution in the transition layer. The transition layer improves the bonding strength between the substrate and the chequered cladding layer, as a result, the two layers are not easy to delaminate and crack under the plastic deformation in the chequer forming process. In addition, the transition layer promotes that the metal element of the substrate flows following the flow of chequered layer metal, which is advantageous for the formation of a chequer height.

Further, in the high-strength corrosion-resistant cladding chequered steel according to the present invention, the thickness of the chequered cladding layer is 10~40% of the thickness of the high-strength corrosion-resistant cladding chequered steel. Controlling the thickness of the chequered cladding layer is advantageous for ensuring the formability of the chequer and the corrosion resistance of the chequered sheet, and is advantageous for improving the mechanical properties of the steel. When the thickness of the chequered cladding layer is more than 40% of the thickness of the high-strength corrosion-resistant cladding chequered steel, it has an adverse effect on the strength of the steel. When the thickness of the chequered cladding layer is less than 10% of the thickness of the high-strength corrosion-resistant cladding chequered steel, a sufficient chequer height cannot be obtained by rolling on the chequered cladding layer, which reduces the surface quality and service life of the steel. Therefore, controlling the chequered cladding layer to a certain thickness is advantageous for obtaining good corrosion resistance, mechanical properties and formability of the steel of the present invention.

Further, the high-strength corrosion-resistant cladding chequered steel according to the present invention preferably has a yield strength of 470 MPa or more, a tensile strength of 610 MPa or more, a shear strength of 410 MPa or more, and an elongation of 40% or less.

Accordingly, another object of the present invention is to provide a method for manufacturing the above high-strength corrosion-resistant cladding chequered steel, comprising the steps of:
(1) producing a substrate blank and a cladding blank;
(2) assembling the substrate blank and the cladding blank, obtaining an billet, and welded sealing all around of bonding surface of each layer, and then vacuuming;
(3) clad rolling: the billet is first heated at a temperature of 1100~1180 °C, and then multi-pass rolled to obtain a cladding steel sheet, wherein the total reduction is not less than 70% and the final rolling temperature is not less than 900 °C, a surface chequer is rolled in the last pass of the multi-pass rolling, wherein the reduction in the last pass is 10%~20%;
(4) coiling after water-cooling.

In the manufacturing method of the present invention, a high-strength corrosion-resistant cladding chequered steel is obtained by clad rolling, a complete metallurgical bonding between the substrate and the cladding layer is realized by controlling the process parameters, and the obtained high-strength corrosion-resistant cladding chequered steel has both good corrosion resistance and excellent mechanical properties.

It should be noted that, in some preferred embodiments, in the step (2), the surface to be bonded of each layer is pretreated to remove the oxide film on the surface before the substrate blank and the cladding blank are assembled.

In addition, in the step (3), the heating temperature of the billet is controlled to 1100~1180 °C for the following reasons: when heated in the above temperature range, a uniform austenite structure is obtained in the cladding blank, the carbides are completely dissolved, and compounds of alloying elements such as niobium and titanium in the cladding blank are partially or completely dissolved, which is advantageous for complete metallurgical bonding.

Further, in the technical solutions of the present invention, a pattern roller is used to roll the surface chequer. The pattern of the surface chequer such as lentils shape or rhombus shape can be selected according to specific conditions of embodiments. In order to further improve the quality of the surface chequer, the engraving depth of the patterned roller is set to 2.8~4 mm.

Further, in the manufacturing method of the present invention, in the step (3), the final rolling temperature is controlled to 920-1000 °C for the following reasons: when the final rolling temperature is higher than 1000 °C, the steel sheet is easily adhered to a patterned roller, and the groove of the patterned roller is filled, as a result, the surface quality of the steel sheet produced cannot meet the requirements.

Further, in the manufacturing method of the present invention, in the step (4), the coiling temperature is 500~650 °C for the following reasons: when the coiling temperature is higher than 650 °C, the surface chequer of a steel sheet will be imprinted on the adjacent strip steel surface during coiling.

The high-strength corrosion-resistant cladding chequered steel of the present invention has high strength and high corrosion resistance by the design of substrate and chequered cladding layer, especially by controlling the mass ratio of the chemical elements in substrate. The high-strength corrosion-resistant cladding chequered steel has a yield strength of 470 MPa or more, a tensile strength of 610 MPa or more, a shear strength of 410 MPa or more, and an elongation of 40% or less.

In addition, the high-strength corrosion-resistant cladding chequered steel according to the present invention has a high surface quality without cracking or delamination.

In the manufacturing method of the present invention, a complete metallurgical bonding between the substrate and the cladding layer is realized by controlling the process parameters, and the obtained high-strength corrosion-resistant cladding chequered steel also has the above merits.

### Brief Description of the Drawings

Fig. 1 shows the metallographic structure of the high-strength corrosion-resistant cladding chequered steel of Example 1 under a low power microscope.
Fig. 2 is a photograph showing the metallographic structure of the substrate of the high-strength corrosion-resistant cladding chequered steel of Example 1.
Fig. 3 is a photograph showing the metallographic structure of the transition layer on one side between the substrate and the chequered cladding layer of the high-strength corrosion-resistant cladding chequered steel of Example 1.
Fig. 4 is a photograph showing the metallographic structure of the transition layer on another side between the substrate and the chequered cladding layer of the high-strength corrosion-resistant cladding chequered steel of Example 1.
Fig. 5 is a schematic view showing the pattern of the surface chequer in the cladding layer of the high-strength corrosion-resistant cladding chequered steel of Example 1.
Fig. 6 is a schematic view showing the structure of the surface chequer in the cladding layer of the high-strength corrosion-resistant cladding chequered steel of Example 1 from another viewing angle.

### Detailed Description

The high-strength corrosion-resistant cladding chequered steel and the manufacturing method thereof according to the present invention will be further explained and illustrated below with reference to the accompanying drawings and specific Examples. However, the explanations and illustrations do not unduly limit the technical solutions of the present invention.

### Examples 1~4

Table 1 lists the mass percentage of the chemical elements in each layer of the high-strength corrosion-resistant cladding chequered steels of Examples 1~4.

**Table 1.**

| (wt%, the balance is Fe and other inevitable impurity elements other than P and S) | | | | | | | | | | | | | | |
|---|---|---|---|---|---|---|---|---|---|---|---|---|---|---|
| Example | Layer | C | Si | Mn | P | S | | Ti | Nb | Ni | Cr | Mo | B | N |
| 1 | Cladding layer | 304 stainless steel | | | | | | | | | | | | |
| | Substrate | 0.1 | 0.35 | 1.5 | 0.01 | 0.005 | 0.04 | 0.018 | 0.02 | - | - | 0.1 | 0.00028 | 0.0045 |
| 2 | Cladding layer | 304L stainless steel | | | | | | | | | | | | |
| | Substrate | 0.14 | 0.25 | 1 | 0.01 | 0.005 | 0.03 | 0.014 | 0.011 | - | 0.2 | - | 0.0003 | 0.0052 |
| 3 | Cladding layer | 316 stainless steel | | | | | | | | | | | | |
| | Substrate | 0.2 | 0.15 | 0.5 | 0.008 | 0.004 | 0.02 | 0.005 | 0.005 | - | - | - | 0.0003 | 0.004 |
| 4 | Cladding layer | 316L stainless steel | | | | | | | | | | | | |
| | Substrate | 0.11 | 0.3 | 1.48 | 0.008 | 0.005 | 0.026 | 0.008 | 0.018 | 0.1 | - | - | 0.00028 | 0.0038 |

The high-strength corrosion-resistant cladding chequered steels of Examples 1~4 were prepared by the following steps (See Table 2 for specific process parameters for each Example):
(1) a substrate blank and a cladding blank was produced according the chemical composition listed in Table 1;
(2) the substrate blank and the cladding blank was assembled to obtain an billet, and all around of bonding surface of each layer were welded, sealed and then the space between the two layers was vacuumed;
(3) clad rolling: the assembly was first heated at a temperature of 1100~1180 °C, and then multi-pass rolled to obtain a cladding steel sheet, wherein the total reduction rate was not less than 70% and the final rolling temperature was 920~1000 °C, a surface chequer was rolled in the last pass of the multi-pass rolling, wherein the reduction rate in the last pass is 10%~20%;
(4) coiling after water-cooling, wherein the coiling temperature is 500~650 °C.

Table 2 lists the specific process parameters in the manufacturing method of the high-strength corrosion-resistant cladding chequered steels of Examples 1~4.

**Table 2**

| Examp le | Blank structure of the billet | Heating temperat ure (°C) | Steel sheet thickne ss (mm) | Chequer ed cladding layer thicknes s (mm) | Final rolling temperat ure (°C) | Total reducti on (%) | Coiling temperat ure (°C) | Reducti on in last pass (%) | Substrate microstruct ure | Cladding layer microstruct ure |
|---|---|---|---|---|---|---|---|---|---|---|
| 1 | cladding layer+substrate+cla dding layer | 1150 | 6 | 1.02 | 980 | 97 | 600 | 10 | ferrite + pearlite | Austenite |
| 2 | cladding layer+substrate+cla dding layer | 1160 | 5 | 0.8 | 1000 | 98 | 655 | 12 | ferrite + pearlite | Austenite |
| 3 | cladding layer+substrate+cla dding layer | 1140 | 4 | 0.5 | 990 | 98 | 550 | 10 | ferrite + pearlite | Austenite |
| 4 | cladding layer+substrate+cla dding layer | 1180 | 5 | 1 | 980 | 97 | 580 | 15 | ferrite + pearlite | Austenite |

Table 3 lists the test results of the high-strength corrosion-resistant cladding chequered steels of Examples 1~4 in various performance tests.

**Table 3**

| Example | Yield strength (MPa) | Tensile strength (MPa) | Elongation (%) | cold bend radius (180°) | Shear strength (MPa) |
|---|---|---|---|---|---|
| 1 | 472 | 611 | 35.8 | 0.7a | 420 |
| 2 | 507 | 649 | 36.0 | 0.7a | 410 |
| 3 | 480 | 650 | 40.0 | 0.7a | 415 |
| 4 | 482 | 638 | 38.0 | 0.7a | 422 |

As can be seen from Table 3, Examples 1-4 exhibited a yield strength of 470 MPa or more, a tensile strength of 610 MPa or more, a shear strength of 410 MPa or more, and an elongation of 40% or less, indicating that the Examples of the present invention had high strength and excellent mechanical properties.

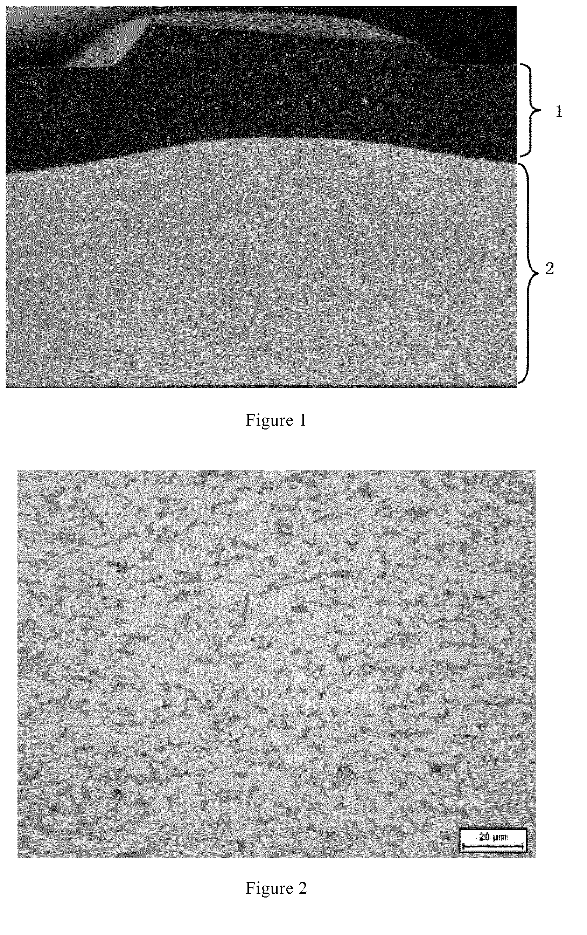

Figure 1 shows the metallographic structure of the high-strength corrosion-resistant cladding chequered steel of Example 1 under a low power microscope. As shown in Figure 1, the high-strength corrosion-resistant cladding chequered steel of Example 1 had a chequered cladding layer 1 and a substrate 2.

Figure 2 is a photograph showing the metallographic structure of the substrate of the high-strength corrosion-resistant cladding chequered steel of Example 1. As shown in Figure 2, the structure of the substrate was ferrite and pearlite, wherein grains in the microstructure was fine and uniform, and the average grain size of ferrite is 10 µm or less.

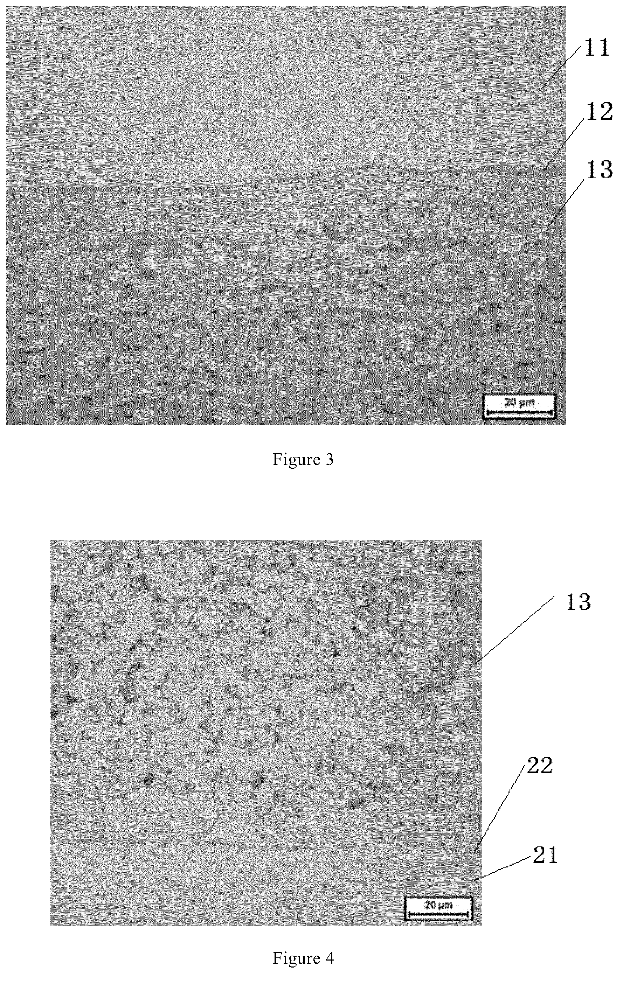

Figure 3 is a photograph showing the metallographic structure of the transition layer on one side between the substrate and the chequered cladding layer of the high-strength corrosion-resistant cladding chequered steel of Example 1. As shown in Figure 3, there was a transition layer 12 between the substrate 13 and the chequered cladding layer 11 of Example 1.

Figure 4 is a photograph showing the metallographic structure of the transition layer on another side between the substrate and the chequered cladding layer of the high-strength corrosion-resistant cladding chequered steel of Example 1. As shown in Figure 4, there was a transition layer 22 between the substrate 13 and the chequered cladding layer 21 of Example 1.

As can be seen from Figure 3 and Figure 4, in Example 1, there was a transition layer between the substrate and the chequered cladding layer cladded on the substrate by double-sided rolling. The transition layers 12, 22 improve the bonding strength between the substrate 13 and the chequered cladding layers 11, 21; as a result, Example 1 was not easy to delaminate and crack.

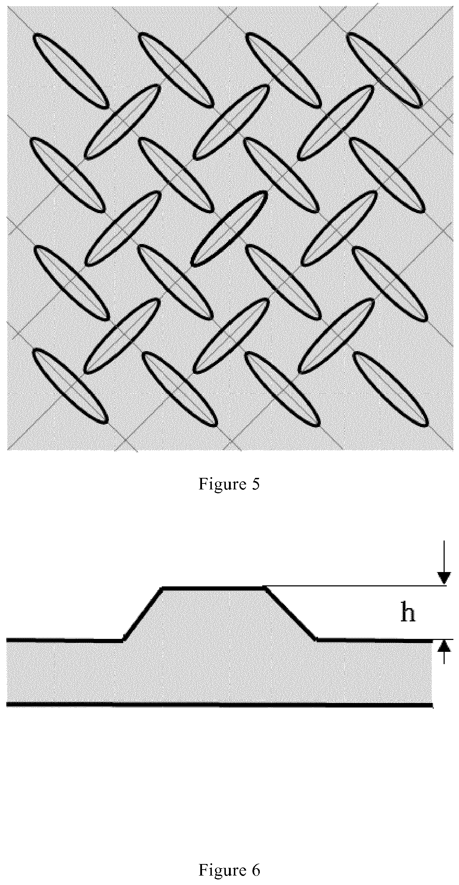

Figure 5 is a schematic view showing the pattern of the surface chequer in the cladding layer of the high-strength corrosion-resistant cladding chequered steel of Example 1. As shown in Figure 5, the surface pattern of Example 1 was a lenticular shape.

Figure 6 is a schematic view showing the structure of the surface chequer in the cladding layer of the high-strength corrosion-resistant cladding chequered steel of Example 1 from another viewing angle. As shown in Figure 6, the height "h" of the surface chequer of Example 1 was 1.02 mm.

It should be noted that the above are merely illustrative of specific Examples of the invention. It is obvious that the present invention is not limited to the above Examples, but has many similar variations. All modifications that are directly derived or associated by those skilled in the art are intended to be within the scope of the appended claims.

## Claims

1. A high-strength corrosion-resistant cladding chequered steel, comprising a substrate and a chequered cladding layer cladded on the substrate by single-sided or double-sided rolling, wherein the chequered cladding layer comprises a surface pattern applied thereto by a patterned roller in a last pass of a multi-pass rolling, wherein the reduction in the last pass is 10% to 20% and the final rolling temperature is controlled to 920 - 1000° C, the patterned roller having an engraving depth of 2.8 to 4 mm, and the substrate comprises the following chemical elements in mass percentage:
C: 0.01% to 0.20%, Si: 0.10% to 0.5%, Mn: 0.5% to 2.0%, Al: 0.02% to 0.04%, Ti: 0.005% to 0.018%, Nb: 0.005% to 0.020%, 0 < B ≤ 0.0003%, N ≤ 0.006%, optionally at least one of Ni, Cr and Mo, wherein Ni≤0.20%, Cr≤0.20% and Mo≤0.10%, and the balance being iron and other inevitable impurities, wherein P is present in an amount of 0.015% or less and S is present in an amount of 0.010% or less;
wherein the steel has a yield strength of 470 MPa or more, a tensile strength of 610 MPa or more, a shear strength of 410 MPa or more, and an elongation of 40% or less, and wherein the thickness of the chequered cladding layer is 10 to 40% of the thickness of the high-strength corrosion-resistant cladding chequered steel,
wherein the chequered cladding layer is an austenitic stainless steel, and
wherein the substrate has a microstructure of ferrite plus pearlite,
wherein there is a transition layer at a joint of the substrate and the chequered cladding layer, and the transition layer has a thickness of 200 µm or less as determined by metallography.

2. A method for manufacturing the high-strength corrosion-resistant cladding chequered steel according to claim 1, comprising the steps of:
(1) producing a substrate blank and a cladding layer blank;
(2) assembling the substrate blank and the cladding layer blank, obtaining a billet, and welded sealing all around the bonding surface of each layer, and then vacuuming;
(3) clad rolling: the billet is first heated at a temperature of 1100 to 1180 °C, and then multi-pass rolled, obtaining a cladding steel sheet, wherein the total reduction is not less than 70% and the final rolling temperature is controlled to 920 to 1000° C, a surface chequer having an engraving depth of 2.8 to 4 mm is rolled in a last pass of the multi-pass rolling, wherein the reduction in the last pass is 10% to 20%;
(4) coiling after water-cooling, wherein the coiling temperature is 500 to 650 °C.

## Patentansprüche

1. Ein hochfester, korrosionsbeständiger, geriffelter Plattierungsstahl, bestehend aus einem Substrat und einer durch ein- oder beidseitiges Walzen auf das Substrat aufgebrachten geriffelten Plattierungsschicht, wobei die geriffelte Plattierungsschicht ein Oberflächenmuster aufweist, das im letzten Durchgang eines mehrmaligen Walzvorgangs durch eine gemusterte Walze darauf aufgebracht wird, wobei die Reduktion im letzten Durchgang 10 % bis 20 % beträgt und die Endwalztemperatur auf 920 bis 1000 °C geregelt wird, die gemusterte Walze eine Gravurtiefe von 2,8 bis 4 mm aufweist und das Substrat die folgenden chemischen Elemente in Massenprozent enthält:
C: 0,01 % bis 0,20 %, Si: 0,10 % bis 0,5 %, Mn: 0,5 % bis 2,0 %, Al: 0,02 % bis 0,04 %, Ti: 0,005 % bis 0,018 %, Nb: 0,005 % bis 0,020 %, 0 < B ≤ 0,0003 %, N ≤ 0,006 %, optional mindestens eines der Elemente Ni, Cr und Mo, wobei Ni ≤ 0,20 %, Cr ≤ 0,20 % und Mo ≤ 0,10 %, der Rest Eisen und andere unvermeidliche Verunreinigungen ist, wobei P in einer Menge von 0,015 % oder weniger und S in einer Menge von 0,010 % oder weniger vorhanden ist,
wobei der Stahl eine Streckgrenze von 470 MPa oder mehr, eine Zugfestigkeit von 610 MPa oder mehr, eine Scherfestigkeit von 410 MPa oder mehr und eine Dehnung von 40 % oder weniger aufweist und wobei die Dicke der geriffelten Plattierungsschicht 10 bis 40 % der Dicke des hochfesten, korrosionsbeständigen geriffelten Plattierungsstahls beträgt,
wobei die geriffelte Plattierungsschicht ein austenitischer Edelstahl ist, und
wobei das Substrat eine Mikrostruktur aus Ferrit und Perlit aufweist,
wobei eine Übergangsschicht an einer Verbindungsstelle zwischen dem Substrat und der geriffelten Plattierungsschicht vorhanden ist und die Übergangsschicht eine Dicke von 200 µm oder weniger aufweist, wie durch Metallografie bestimmt.

2. Verfahren zur Herstellung des hochfesten, korrosionsbeständigen geriffelten Plattierungsstahls nach Anspruch 1, umfassend die folgenden Schritte:
(1) Herstellen eines Substratrohlings und eines Plattierungsrohlings,
(2) Zusammenfügen des Substratrohlings und des Plattierungsrohlings zu einem Block, Verschweißen der Verbindungsflächen jeder Schicht rundherum und dann Vakuumieren,
(3) Plattierungswalzen: Der Block wird zunächst auf eine Temperatur von 1100 bis 1180 °C erhitzt und anschließend mehrmalig gewalzt, wodurch ein Plattierungsstahlblech erhalten wird, wobei die Gesamtreduktion nicht weniger als 70 % beträgt und die Endwalztemperatur auf 920 bis 1000 °C geregelt wird, eine Oberflächenriffelung mit einer Gravurtiefe von 2,8 bis 4 mm im letzten Durchlauf des mehrmaligen Walzens gewalzt wird, wobei die Reduktion im letzten Stich 10 % bis 20 % beträgt,
(4) Aufwickeln nach Wasserkühlung, wobei die Wickeltemperatur von 500 bis 650 °C beträgt.

## Revendications

1. Acier strié de revêtement résistant à la corrosion à haute résistance, comprenant un substrat et une couche de revêtement striée revêtant le substrat par laminage unilatéral ou bilatéral, dans lequel la couche de revêtement striée comprend un motif de surface appliqué sur celle-ci par un rouleau à motifs dans une dernière passe d'un laminage multipasse, dans lequel la réduction dans la dernière passe est de 10 % à 20 % et la température de laminage finale est régulée à 920 - 1 000 °C, le rouleau à motifs ayant une profondeur de gravure de 2,8 à 4 mm, et le substrat comprend les éléments chimiques suivants en pourcentage massique :
C : 0,01 % à 0,20 %, Si : 0,10 % à 0,5 %, Mn : 0,5 % à 2,0 %, Al : 0,02 % à 0,04 %, Ti : 0,005 % à 0,018 %, Nb : 0,005 % à 0,020 %, 0 < B ≤ 0,0003 %, N ≤ 0,006 %, facultativement au moins un de Ni, Cr et Mo, dans lequel Ni ≤ 0,20 %, Cr ≤ 0,20 % et Mo ≤ 0,10 %, et le reste étant du fer et d'autres impuretés inévitables, dans lequel P est présent en une quantité de 0,015 % ou moins et S est présent en une quantité de 0,010 % ou moins ;
dans lequel l'acier présente une limite d'élasticité de 470 MPa ou plus, une résistance à la traction de 610 MPa ou plus, une résistance au cisaillement de 410 MPa ou plus et un allongement de 40 % ou moins, et dans lequel l'épaisseur de la couche de revêtement striée représente 10 à 40 % de l'épaisseur de l'acier strié de revêtement résistant à la corrosion à haute résistance,
dans lequel la couche de revêtement striée est un acier inoxydable austénitique, et
dans lequel le substrat présente une microstructure de ferrite plus perlite,
dans lequel il y a une couche de transition au niveau d'un joint du substrat et de la couche de revêtement striée, et la couche de transition a une épaisseur de 200 µm ou moins telle que déterminée par métallographie.

2. Procédé de fabrication de l'acier strié de revêtement résistant à la corrosion à haute résistance selon la revendication 1, comprenant les étapes suivantes :
(1) la production d'une ébauche de substrat et d'une ébauche de couche de revêtement ;
(2) l'assemblage de l'ébauche de substrat et de l'ébauche de couche de revêtement, l'obtention d'une billette et le scellage par soudage tout autour de la surface de liaison de chaque couche, puis l'aspiration ;
(3) le plaquage-laminage : la billette est d'abord chauffée à une température de 1 100 à 1 180 °C, puis laminée en plusieurs passes, ce qui permet d'obtenir une tôle d'acier de revêtement, dans lequel la réduction totale n'est pas inférieure à 70 % et la température de laminage final est régulée à 920 à 1 000 °C, une strie de surface ayant une profondeur de gravure de 2,8 à 4 mm est laminée dans une dernière passe du laminage multipasse, dans lequel la réduction dans la dernière passe est de 10 % à 20 % ;
(4) l'enroulement après refroidissement par eau, dans lequel la température d'enroulement est de 500 à 650 °C.
